(19) Europäisches Patentamt
European Patent Office
Office européen des brevets

(11) **EP 3 327 840 B1**

(12) **FASCICULE DE BREVET EUROPEEN**

(45) Date de publication et mention
de la délivrance du brevet:
**02.10.2019 Bulletin 2019/40**

(21) Numéro de dépôt: **17203594.1**

(22) Date de dépôt: **24.11.2017**

(51) Int Cl.:
*H01M 6/14* (2006.01)  *H01M 4/36* (2006.01)
*H01M 4/38* (2006.01)  *H01M 4/48* (2010.01)
*H01M 4/58* (2010.01)  *H01M 4/62* (2006.01)
*H01M 4/66* (2006.01)  *H01M 4/80* (2006.01)
*H01M 4/02* (2006.01)

(54) **PILE À CATHODE LIQUIDE SPÉCIFIQUE**

BATTERIE MIT SPEZIFISCHER FLÜSSIGER KATHODE

BATTERY WITH SPECIFIC LIQUID CATHODE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.11.2016 FR 1661585**

(43) Date de publication de la demande:
**30.05.2018 Bulletin 2018/22**

(73) Titulaire: **Commissariat à l'énergie atomique et aux énergies alternatives**
**75015 Paris (FR)**

(72) Inventeurs:
• **CHAVILLON, Benoît**
**38000 GRENOBLE (FR)**

• **BLANC, Lionel**
**38000 GRENOBLE (FR)**
• **MAYOUSSE, Eric**
**38100 GRENOBLE (FR)**
• **VINCENT, Rémi**
**38000 GRENOBLE (FR)**

(74) Mandataire: **Brevalex**
**95, rue d'Amsterdam**
**75378 Paris Cedex 8 (FR)**

(56) Documents cités:
**FR-A1- 2 402 307    FR-A1- 3 032 559**
**GB-A- 2 187 590**

**Description**

**DOMAINE TECHNIQUE**

La présente invention a trait à une pile à cathode liquide spécifique et, plus précisément, à une pile à cathode liquide et à anode de calcium présentant une matrice cathodique spécifique rendant l'utilisation de ces piles possibles à des températures supérieures à 150°C sans générer de problèmes de sécurité et pouvant délivrer également une tension dès la température ambiante.

La présente invention peut trouver application dans tous les domaines nécessitant la production d'énergie électrique, dans des contextes où la température est particulièrement élevée, tel que cela est le cas des applications pétrolières comme le domaine du forage ou de la surveillance des puits en production ou encore de la géothermie.

Comme mentionné ci-dessus, les piles de l'invention reposent sur la technologie des piles à cathode liquide, ce qui signifie, en d'autres termes, qu'elles reposent sur la particularité que le composé actif utilisé à la cathode remplit également le rôle de solvant de l'électrolyte, un des modèles phares de ce type de pile étant la pile lithium-chlorure de thionyle.

Ainsi, un tel système se compose classiquement des éléments suivants :

- une électrode négative (ou anode) en lithium métallique, où se produit l'oxydation du lithium selon la réaction suivante :

$$Li \rightarrow Li^+ + e^-$$

- une électrode positive (ou cathode) comprenant, généralement, une matrice pouvant piéger le composé actif liquide, en l'occurrence, du chlorure de thionyle, qui est réduit selon la réaction suivante :

$$2SOCl_2 + 4e^- \rightarrow S + SO_2 + 4Cl^-$$

- un électrolyte disposé entre ladite électrode négative et ladite électrode positive, lequel électrolyte comporte, comme solvant, du chlorure de thionyle, des sels et éventuellement un ou plusieurs additifs,

l'électrode négative et l'électrode positive étant reliées à un circuit extérieur, qui réceptionne le courant électrique produit *via* les électrodes susmentionnées.

En combinant la réaction électrochimique à l'électrode positive et la réaction électrochimique à l'électrode négative, la réaction globale (dite de décharge) peut être schématisée par l'équation suivante :

$$4\,Li + 2SOCl_2 \rightarrow S + SO_2\ (gaz) + 4LiCl\ (précipité)$$

les produits de la réaction étant ainsi du soufre, partiellement soluble dans l'électrolyte, du gaz $SO_2$, qui se solubilise dans l'électrolyte et un sel chlorure de lithium LiCl, qui précipite et forme un réseau continu dans la matrice carbonée constitutive de l'électrode positive. Le chlorure de lithium étant un matériau cristallin, il se réorganise progressivement dans la matrice, afin d'en occuper l'espace vide, la matrice constituant ainsi une zone de récupération des produits de réaction.

La matrice carbonée peut adopter l'une des formes suivantes :

- une matrice résultant d'une poudre comprimée, par exemple, une poudre de graphite, et présentant une grande surface spécifique, telle que définie dans FR 2 166 015 ;
- une matrice carbonée, par exemple, en noir d'acétylène comprenant une dispersion de particules de cuivre, ladite matrice carbonée résultant de l'agglomération de poudres, comme décrit dans FR 2 402 307 ;
- une matrice carbonée composée d'un aérogel de carbone à grande surface spécifique, tel que décrit dans FR 2 872 347.

Les documents FR 3 032 559 A1 et GB 2 187 590 A divulguent également des piles à cathode liquide comprenant une anode en calcium, un électrolyte comprenant un solvant oxydant soufré ou phosphoré et au moins un sel, et une cathode comprenant, comme matériau actif, un composé identique au solvant oxydant susmentionné.

Si, du point de vue de leurs caractéristiques électrochimiques, les piles $Li/SOCl_2$ présentent un certain nombre d'avantages (par exemple, une tension thermodynamique de 3,64 V par cellule en se basant sur la variation d'enthalpie libre due à la réaction globale de décharge susmentionnée ; une énergie massique théorique élevée de 1470 Wh/kg (de l'ordre de 5273 kJ/kg) ; un phénomène d'autodécharge très faible (évalué à 1% de perte de capacité par an à une température de 20°C ; une température de fonctionnement s'échelonnant de -60°C (limitation imposée par l'électrolyte) à 180°C (limitation imposée par le lithium métallique) ; une pression interne faible, du fait que les produits de réactions gazeux, tels que $SO_2$, sont solubles, en partie, dans l'électrolyte), ce système présente aussi un certain nombre d'inconvénients, en raison notamment de la réactivité du lithium métallique avec l'humidité de l'air ou de l'eau, pour former de l'hydrogène et de la lithine LiOH avec production de chaleur. Qui plus est, il se forme une couche de passivation à la surface du lithium (cette couche comprenant du LiCl), ce qui peut occasionner une chute de tension lors d'un appel de courant.

Enfin, comme suggéré ci-dessus, l'utilisation de ce système est théoriquement limitée à une température de 180°C, point de fusion du lithium au-delà duquel des courts-circuits se produisent générant un emballement thermique et une surpression de la pile, pouvant conduire à sa destruction.

Aussi, à des températures allant au-delà de 180°C, l'utilisation de telles piles n'est plus possible à cause de la fusion du lithium. Par ailleurs, l'utilisation de piles à anodes de lithium pose des problèmes de sécurité apparaissant lors de leur production, de leur transport, de leur utilisation voire de leur recyclage.

Pour pallier ces inconvénients, il a été proposé d'utiliser, comme matériau constitutif de l'électrode négative, un matériau à base d'un alliage de lithium avec un second métal qui présente un point de fusion supérieur à celui du lithium métallique seul, un alliage de ce type étant un alliage de lithium et de magnésium, tel que décrit notamment dans US 5,705,293, et plus spécifiquement, des alliages comportant une proportion de magnésium de 30%, ce qui permet d'accéder à des températures d'utilisation de 200-220°C. En effet, l'introduction de magnésium dans cette proportion induit un déplacement vers des valeurs plus élevées de température de fusion, comme l'atteste le diagramme de phase Li/Mg.

Toutefois, compte tenu de la forte résistance interne de ces piles comportant un tel alliage au niveau de l'électrode négative, il est nécessaire de les conditionner avant utilisation, ces opérations de conditionnement pouvant s'avérer contraignantes pour l'utilisateur. D'autre part, en cas de dépassement de la température de fusion de l'anode, ces piles peuvent présenter également des problèmes de sécurité.

A titre alternatif, il a également été proposé des piles plus sécuritaires que les piles au lithium, ces piles fonctionnant avec une anode, non plus en lithium, mais en calcium et une cathode à base de chlorure de thionyle, ce type de pile étant dénommée pile Ca/Chlorure de thionyle.

Ce type de pile se compose classiquement des éléments suivants :

- une électrode négative (ou anode) en calcium métallique, où se produit l'oxydation du calcium selon la réaction suivante :

$$Ca \rightarrow Ca^{2+} + 2e^-$$

- une électrode positive (ou cathode) comprenant, également, une matrice pouvant piéger le composé actif liquide, en l'occurrence, du chlorure de thionyle, qui est réduit selon la réaction suivante :

$$2SOCl_2 + 4e^- \rightarrow S + SO_2 + 4Cl^-$$

- un électrolyte disposé entre ladite électrode négative et ladite électrode positive,

la réaction globale (dite de décharge) étant schématisée par l'équation suivante :

$$2\,Ca + 2SOCl_2 \rightarrow 2CaCl_2 + SO_2 + S$$

Le soufre et le dioxyde de soufre sont, en tout ou partie, solubles dans l'électrolyte, tandis que le chlorure de calcium $CaCl_2$ va également précipiter dans la matrice avec toutefois un comportement différent du chlorure de lithium LiCl.

En effet, du fait qu'un atome de calcium a une taille de 180 pm (comparativement à 145 pm pour le lithium) et que lors de sa chloration, un atome de calcium se lie à deux atomes de chlore au lieu d'un seul pour un atome de lithium, les molécules de chlorure de calcium $CaCl_2$ sont plus volumineuses que les molécules de chlorure de lithium. Qui plus est, le chlorure de calcium $CaCl_2$ est un solide amorphe au contraire du chlorure de lithium LiCl, qui est cristallin.

Ainsi, lors du dépôt du chlorure de calcium sur la matrice, il n'y aura pas de réorganisation de celui-ci au sein de la matrice du fait du son caractère amorphe et non conducteur électronique. Qui plus est, du fait de son volume plus important, il peut occasionner :

- un dépôt uniquement à la surface de la matrice (et non dans sa porosité), ce qui peut occasionner une forte résistance à la réaction de décharge de la pile et provoquer à terme son arrêt ;

- ou alors si le dépôt s'effectue dans les pores de la matrice, un colmatage de cette dernière, ce qui peut empêcher le catholyte de circuler, voire ce qui peut occasionner l'emprisonnement d'une partie du catholyte au sein de la matrice, le rendant ainsi indisponible pour les réactions ultérieures.

D'autre part, le calcium permet un fonctionnement à des températures plus élevées qu'avec le lithium, ces températures plus élevées contribuant à exacerber les phénomènes susmentionnés. Aussi, une matrice fonctionnant correctement à température ambiante pourrait voir son rendement fortement réduit aux températures élevées praticables avec le calcium, car elle ne possèderait plus un réseau de pores d'un diamètre d'entrée ou d'un volume suffisant à l'accueil des molécules de $CaCl_2$ issues des réactions de la pile.

Au regard de ce qui existe, les auteurs de la présente invention se sont fixé pour objectif de mettre en place un nouveau type de pile à cathode liquide et anode au calcium, dont les inconvénients liés aux problèmes générés sur la matrice par le chlorure de calcium sont jugulés, notamment en proposant une structure de matrice spécifique.

## EXPOSÉ DE L'INVENTION

Aussi, l'invention a trait à une pile à cathode liquide comprenant :

- une anode en calcium ;
- un électrolyte comprenant un solvant oxydant soufré et/ou phosphoré et au moins un sel ;
- une cathode comprenant, comme matériau actif, un composé identique au solvant oxydant susmentionné et comprenant une matrice carbonée ;

caractérisée en ce que la matrice carbonée est une matrice autosupportée comprenant des fibres de carbone enchevêtrées présentant une porosité d'au moins 90% et une surface spécifique inférieure ou égale à 5 $m^2$/g.

Avant d'entrer plus en détail dans l'exposé de l'invention, nous précisons les définitions suivantes.

Par cathode, on entend, classiquement, dans ce qui précède et ce qui suit, l'électrode qui est le siège d'une réaction de réduction, en l'occurrence, ici, la réduction de la cathode liquide, quand la pile débite du courant, c'est-à-dire lorsqu'elle est en processus de décharge. La cathode peut être également qualifiée d'électrode positive.

Par anode, on entend, classiquement, dans ce qui précède et ce qui suit, l'électrode qui est le siège d'une réaction d'oxydation, quand l'accumulateur débite du courant, c'est-à-dire lorsqu'il est en processus de décharge. L'anode peut être également qualifiée d'électrode négative.

Par matériau actif, on entend, classiquement, dans ce qui précède et ce qui suit, le matériau qui est directement impliqué dans la réaction de réduction se déroulant au niveau de la cathode.

Par matrice autosupportée, on entend une matrice qui se tient d'elle-même, en d'autres termes, qui n'est pas apposée sur un support, par exemple, sur une grille ou un feuillard métallique, comme cela est le cas classiquement pour les matrices carbonées utilisées en tant que cathode mettant en oeuvre un matériau actif liquide ou gazeux, pour assurer la conduction électrique ou la fonction de collecteur de courant et la tenue mécanique de l'électrode. La matrice de l'invention assure donc sa propre conduction électrique et sa propre tenue mécanique. En d'autres termes, la cathode est donc dénuée de support collecteur de courant autre que la matrice carbonée autosupportée. En cas de chocs ou de vibrations, il y a donc moins de risque d'apparition de courts-circuits liés, dans les cas classiques, à la dégradation de l'interface entre le support et le matériau carboné déposé sur le support.

Comme indiqué ci-dessus, la cathode des piles conformes à l'invention comporte, comme matériau actif, un composé identique au solvant oxydant susmentionné et une matrice carbonée spécifique, qui permet d'accueillir ledit matériau actif et également de récupérer les produits de réaction de la pile comme $CaCl_2$.

Cette matrice carbonée comprend des fibres de carbone enchevêtrées, et encore plus spécifiquement est composée majoritairement voire exclusivement de fibres de carbone enchevêtrées. Ces fibres de carbone peuvent présenter, avantageusement, une longueur inférieure à 20 mm et un diamètre inférieur à 15 $\mu$m. De manière spécifique, la matrice carbonée peut se présenter sous la forme d'un voile de fibres de carbone.

En outre, la matrice carbonée présente une porosité au moins égale à 90%, de préférence supérieure ou égale à 92%, par exemple de 92% à 98%, ou encore supérieure à 95% et présente une surface spécifique inférieure ou égale à 5 $m^2$/g, par exemple de 0,5 à 5 $m^2$/g, ou encore inférieure à 1 $m^2$/g.

On précise que la porosité correspond au volume de vide de la matrice par rapport à son volume total. Pour procéder à sa mesure, la matrice, dont la quantité et les caractéristiques géométriques (longueur, largeur et épaisseur) sont connues, est placée dans un volume initial donné d'électrolyte. Puis il est procédé à la mesure de la différence entre le volume d'électrolyte après immersion de la matrice et le volume initial d'électrolyte, cette différence correspond au volume de vide de la matrice. La porosité en est déduite en faisant le rapport du volume de vide sur le volume total de la matrice.

On précise que la surface spécifique est mesurée par la méthode BET mise en oeuvre avec un appareil Micromeritics Tristar II-Surface Area and Porosity, cette méthode étant décrite dans Journal of the American Chemical Society, p. 309 (60), 1938.

En alliant une forte porosité à une faible surface spécifique, il est ainsi possible de surmonter les inconvénients mentionnés ci-dessus, à savoir les dépôts de CaCl2 intervenant à la surface de la matrice et dans la porosité, pouvant engendrer un colmatage de celle-ci. Ces deux propriétés associées permettent, également, de pouvoir démarrer une décharge à température ambiante sans chute de tension sous 1,5 V et d'avoir un fonctionnement optimal avec de très bonnes densités d'énergie développées par gramme de cathode utilisé.

Enfin, la matrice carbonée peut également répondre à l'une ou plusieurs des caractéristiques suivantes :

- un grammage inférieur ou égal à 20 $g/m^2$ ;
- lorsque la matrice se présente sous forme d'une plaque, une épaisseur inférieure à 1 mm, de préférence inférieure à 0,5 mm ;
- la matrice carbonée est dénuée de liant, tel que du liant polymérique comme le polytétrafluoroéthylène pour assurer la tenue mécanique.

Concernant le grammage, il est déterminé par la mesure de la masse de matrice, la valeur de la masse étant ramenée à la surface en $m^2$ de ladite matrice. Du fait que ce grammage est, avantageusement, inférieur ou égal à 20 $g/m^2$, ceci induit un gain sur la masse de la matrice et donc du système électrochimique dans lequel est introduite ladite matrice et, par conséquent, une augmentation de la densité d'énergie massique dudit système.

En outre, pour la reprise de courant, la matrice peut être munie d'une ou plusieurs pattes de métal conducteur (par exemple, du nickel) fixée(s) par simple soudure.

L'anode est, quant à elle, une anode en calcium (c'est-à-dire une anode exclusivement composée de calcium). Le calcium présente l'avantage d'avoir un point de fusion élevé (de l'ordre de 842°C). De plus, le calcium présente une capacité volumique de 2,06 $Ah/cm^3$ égale à celle du lithium. Ceci permet, à volume égal, d'introduire la même capacité en calcium dans une pile.

Comme mentionné ci-dessus, l'électrolyte comprend un solvant oxydant soufré et/ou phosphoré et au moins un sel, ce solvant oxydant soufré et/ou phosphoré constituant également le matériau actif de la cathode.

Plus spécifiquement, le solvant oxydant peut être :

- un solvant soufré, comprenant un ou plusieurs atomes de chlore, tel qu'un solvant choisi parmi le chlorure de thionyle ($SOCl_2$), le chlorure de sulfuryle ($SO_2Cl_2$), le dichlorure de disoufre ($S_2Cl_2$), le dichlorure de soufre ($SCl_2$) ;
- un solvant soufré non chloré, tel que le dioxyde de soufre ($SO_2$) ; ou
- un solvant phosphoré et éventuellement soufré comprenant un ou plusieurs atomes de chlore, tel que le trichlorure de phosphoryle ($POCl_3$), le trichlorure de thiophosphoryle ($PSCl_3$).

De préférence, le solvant oxydant est du chlorure de thionyle ($SOCl_2$).

Le sel présent dans l'électrolyte peut résulter de la réaction d'un acide de Lewis et d'une base de Lewis, cette réaction pouvant avoir lieu *ex situ,* c'est-à-dire avant l'introduction dans la pile ou *in situ,* c'est-à-dire au sein de la pile, lorsque l'acide de Lewis et la base de Lewis correspondants sont introduits dans la pile.

Plus précisément, le sel peut être réalisé par réaction :

- d'une base de Lewis de formule $A^1X_2$, dans laquelle X représente un atome d'halogène, tel qu'un atome de chlore, un atome de brome, un atome de fluor, un atome d'iode, et $A^1$ représente un élément divalent, tel qu'un élément alcalino-terreux comme Ca et Sr, de formule $A^2X$, dans laquelle X est tel que défini ci-dessus et $A^2$ représente un élément monovalent, tel qu'un élément alcalin comme Na, Li ou un groupe ammonium $NH_4^+$, de formule $A^3X_3$, dans laquelle X est tel que défini ci-dessus et $A^3$ représente un élément trivalent tel que Ba ; et
- d'un acide de Lewis choisi parmi un halogénure d'aluminium $AlX_3$, un halogénure de gallium $GaX_3$, un halogénure de bore $BX_3$, un halogénure d'indium $InX_3$, un halogénure de vanadium $VX_3$, un halogénure de silicium $SiX_4$, un halogénure de niobium NbXs, un halogénure de tantale TaXs, un halogénure de tungstène $WX_5$, un halogénure de bismuth $BiX_3$, des borohydrures, des chloroborates et les mélanges de ceux-ci, X représentant, comme ci-dessus, un atome d'halogène tel qu'un atome de brome, un atome de chlore, un atome de fluor et un atome d'iode.

De préférence, l'acide de Lewis est $AlCl_3$ ou $GaCl_3$ et la base de Lewis est $SrCl_2$, notamment lorsque le solvant oxydant utilisé est le chlorure de thionyle.

Outre la présence d'un solvant et d'un sel tel que défini ci-dessus, l'électrolyte peut comprendre un ou plusieurs additifs choisis, par exemple, pour limiter l'autodécharge des piles et la corrosion en décharge.

Ce et ces additifs peuvent être choisis parmi l'acide fluorhydrique HF, $SO_2$, des sels tels que $GaCl_3$, $BiCl_3$,

$BCl_3$, $InCl_3$, $VCl_3$, $SiCl_4$, $NbCl_5$, $TaCl_5$, $PCl_5$ et $WCl_6$.

Ce et ces additifs peuvent être présents en une teneur allant de 0 à 50% de la concentration du sel.

Les piles de l'invention peuvent être développées selon différentes technologies et, en particulier, selon deux technologies de pile cylindriques, qui sont les piles de structure dite à électrodes concentriques et les piles de structure dite à électrodes spiralées, ces piles pouvant être de différents formats (tels que les formats AAA, AA, C, D ou DD).

Ces piles sont généralement utilisées pour des applications de type « énergie », dans lesquelles les courants sont plutôt faibles. La surface des électrodes et, principalement celle de l'anode, est moindre ce qui limite la corrosion en décharge.

Pour les piles de structure dite à électrodes spiralées, elles comportent, classiquement, deux électrodes planes rectangulaires dont la largeur doit être compatible avec la hauteur du godet et présentant, une longueur configurée pour que, une fois enroulées sur elles-mêmes, elles constituent un cylindre dont le diamètre permet son introduction dans le godet destiné à accueillir ces électrodes.

Comme mentionné ci-dessus, les piles de l'invention trouvent leur application dans tous les domaines nécessitant la production d'énergie électrique, dans des contextes où la température est élevée (notamment, des températures supérieures à 200 °C), ce qui est le cas notamment, dans la prospection et l'exploitation du pétrole ou encore dans les forages destinés à l'utilisation de la géothermie. Dans ces domaines, les piles de l'invention peuvent ainsi servir à l'alimentation électrique des systèmes de mesure, qui comportent déjà des composants électroniques permettant un fonctionnement à de telles températures.

L'invention va, à présent, être décrite en référence aux modes de réalisation particuliers définis ci-dessous et en référence aux figures annexées.

## BREVE DESCRIPTION DES FIGURES

La figure 1 est une courbe de décharge illustrant l'évolution de la tension de pile U (en mV) en fonction de la capacité déchargée C (en mAh) à courant constant (5 mA) et à 165°C des piles exemplifiées à l'exemple 1.

La figure 2 est une courbe de décharge illustrant l'évolution de la tension de pile U (en mV) en fonction de la capacité déchargée C (en mAh) à courant constant (7 mA) et à 165°C des piles exemplifiées à l'exemple 2.

La figure 3 est une courbe de décharge illustrant l'évolution de la tension de pile U (en mV) en fonction de la capacité déchargée C (en mAh) à courant constant (7 mA) et à 220 °C des piles exemplifiées à l'exemple 3.

La figure 4 est une courbe de décharge illustrant l'évolution de la tension de pile U (en mV) en fonction du temps t (en h) à courant constant (10 mA) et à 20 °C de la pile exemplifiée à l'exemple 4.

La figure 5 est une courbe de décharge illustrant l'évolution de la tension de pile U (en mV) en fonction du temps t (en heure) à courant constant (10 mA) à 70°C puis à 100°C de la pile exemplifiée à l'exemple 5.

Les figures 6 et 7 représentent respectivement les courbes de décharge illustrant l'évolution de la tension de pile U (en mV) en fonction du temps t (en heure) pour la pile non conforme à l'invention et pour la pile conforme à l'invention exemplifiées à l'exemple 6.

## EXPOSÉ DÉTAILLÉ DE MODES DE RÉALISATION PARTICULIERS

### EXEMPLE 1

Le but de cet exemple est de démontrer les performances d'une pile conforme à l'invention en termes de décharge à une température élevée (165°) en comparaison d'une pile non conforme à l'invention.

La pile conforme à l'invention est une pile de structure dite à électrodes concentriques (format C) et comprend plus spécifiquement les éléments suivants :

- une électrode positive d'une hauteur de 30 mm placée au centre se présentant sous forme d'une matrice carbonée constituée d'un voile de fibres de carbone présentant une porosité de 92%, une surface spécifique de 5 $m^2$/g et un grammage de 20 g/$m^2$, la matrice étant destinée à accueillir l'électrolyte, à savoir le solvant (assurant le rôle de matériau actif de l'électrolyte), qui est du chlorure de thionyle et le sel électrolytique (à savoir, du $Sr(AlCl_4)_2$, 1,5 M issu de la réaction de $SrCl_2$ et de $AlCl_3$) ;
- l'électrode négative en calcium disposée de manière concentrique par rapport à l'électrode positive ;
- entre l'électrode positive et l'électrode négative, un séparateur annulaire et un séparateur sous forme d'un disque ;
- un réceptacle de l'ensemble sous forme d'un godet, lequel forme également le pôle négatif de la pile ;
- une traversée verre-métal soudée au godet;
- un pion positionné dans la partie supérieure de la pile au niveau de la traversée verre-métal, ce pion constituant le pôle positif de la pile, ce pion étant relié à l'électrode positive *via* une connexion positive.

La pile non conforme à l'invention est de structure similaire à celle de l'invention, si ce n'est que l'électrode positive consiste en une matrice carbonée composée de noir de carbone et d'un liant polymérique du type polytétrafluoroéthylène, ladite matrice étant déposée sur une grille de nickel.

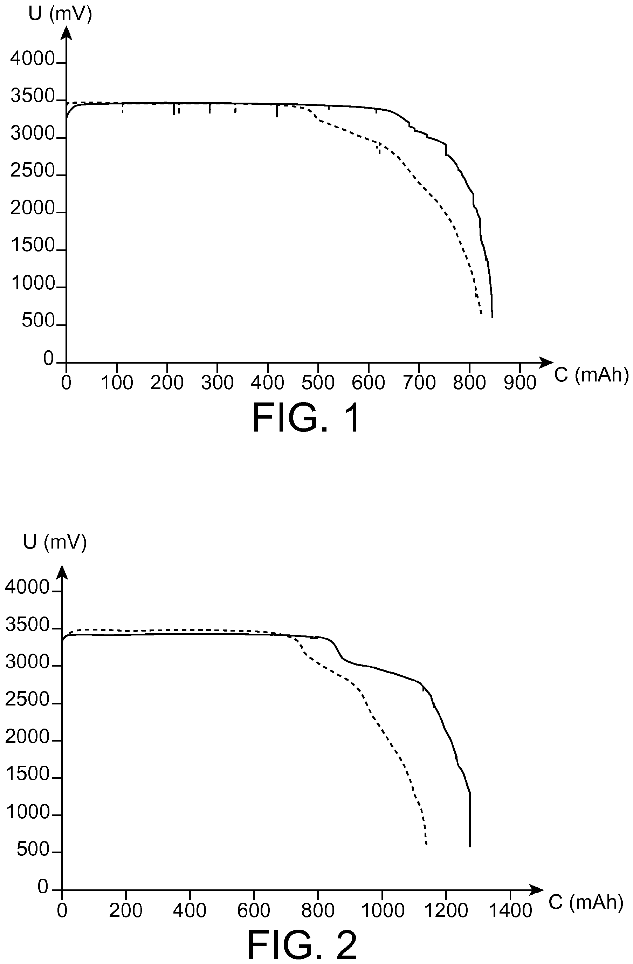

Pour ces deux piles, il est déterminé la courbe de décharge, c'est-à-dire la courbe illustrant l'évolution de la tension de pile U (en mV) en fonction de la capacité déchargée C (en mAh) à courant constant (5 mA) et à 165°C (sur la figure 1, respectivement courbe en trait plein pour la pile conforme à l'invention et courbe en pointillés pour la pile non conforme à l'invention).

Il n'y a aucune différence de tension de plateau entre les deux électrodes positives ce qui montre qu'aucune surtension n'est engendrée par l'utilisation de l'électrode de la pile conforme à l'invention. Le contact électrique n'est pas impacté. Au contraire la tension de pile reste élevée pendant un plus grand nombre d'heures dans le cas de la pile de l'invention. La masse de carbone de l'électrode de la pile non conforme à l'invention est de 1,6 g contre 0,042 g pour l'électrode de la pile de l'invention, ce qui correspond respectivement à 0,515 Ah g$^{-1}$ et 20 Ah g$^{-1}$.

La capacité massique de l'électrode des piles de l'invention est donc près de quarante fois supérieure à celle de l'électrode de la pile non conforme à l'invention.

## EXEMPLE 2

Cet exemple est similaire à l'exemple 1, si ce n'est que l'expérience de décharge est réalisée à 7 mA.

La courbe de décharge, c'est-à-dire la courbe illustrant l'évolution de la tension de pile U (en mV) en fonction de la capacité déchargée C (en mAh) à courant constant (7 mA) et à 165°C (respectivement courbe en trait plein pour la pile conforme à l'invention et courbe en pointillés pour la pile non conforme à l'invention), est représentée sur la figure 2.

Il y a peu de différence de tension de plateau entre les deux électrodes positives ce qui montre qu'aucune surtension significative n'est engendrée par l'utilisation de l'électrode de la pile conforme à l'invention. Le contact électrique n'est pas impacté. Au contraire la tension de pile reste élevée pendant un plus grand nombre d'heures dans le cas de l'électrode de la pile conforme à l'invention. La masse de carbone de l'électrode de la pile non conforme à l'invention est de 1,6 g contre 0,042 g pour l'électrode de la pile conforme à l'invention ce qui correspond respectivement à 0,712 Ah g$^{-1}$ et 30 Ah g$^{-1}$.

La capacité massique de l'électrode de la pile conforme à l'invention est donc près de quarante fois supérieure à celle de l'électrode de la pile non conforme à l'invention.

## EXEMPLE 3

Cet exemple est similaire à l'exemple 1, si ce n'est que l'expérience de décharge est réalisée à 7 mA et à 220°C et pour une hauteur d'électrode de 20 mm.

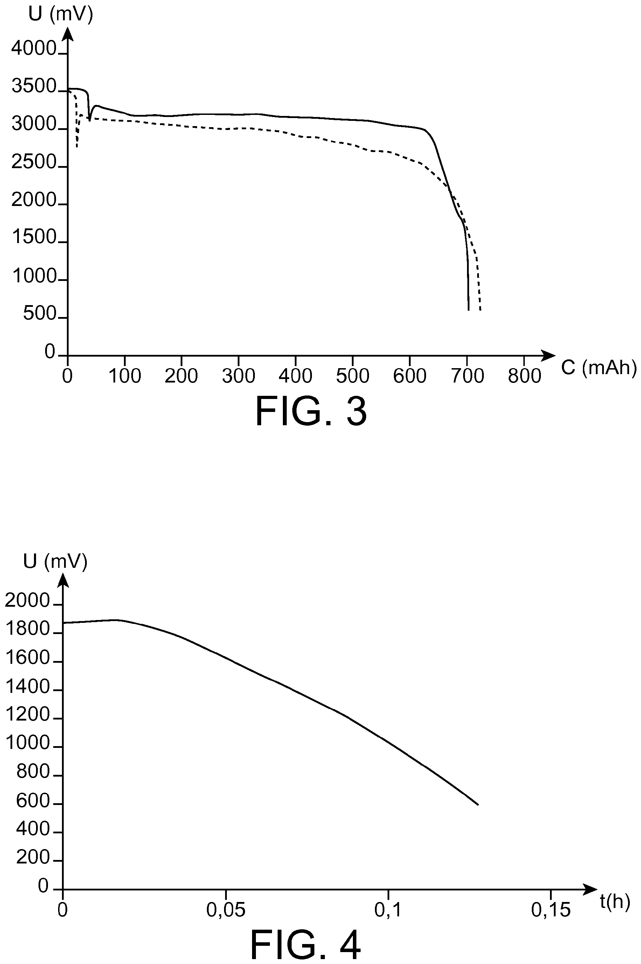

La courbe de décharge, c'est-à-dire la courbe illustrant l'évolution de la tension de pile U (en mV) en fonction de la capacité déchargée C (en mAh) à courant constant (7 mA) et à 220 °C (respectivement courbe en trait plein pour la pile conforme à l'invention et courbe en pointillés pour la pile non conforme à l'invention), est représentée sur la figure 3.

Il ressort, de cette figure, que la tension de plateau est améliorée par l'utilisation de l'électrode de la pile conforme à l'invention.

## EXEMPLE 4

Cet exemple est similaire à l'exemple 1, si ce n'est que l'expérience de décharge est réalisée à 10 mA et à 20°C uniquement pour la pile conforme à l'invention.

La courbe de décharge, c'est-à-dire la courbe illustrant l'évolution de la tension de pile U (en mV) en fonction du temps t (en heure) à courant constant (10 mA) et à 20 °C, est représentée sur la figure 4.

Il ressort de cette figure l'apparition immédiate à température ambiante d'une tension délivrée supérieure à 1,5 V.

## EXEMPLE 5

Cet exemple est similaire à l'exemple 1, si ce n'est que l'expérience de décharge est réalisée à 10 mA à 70°C puis à 100°C uniquement pour la pile conforme à l'invention.

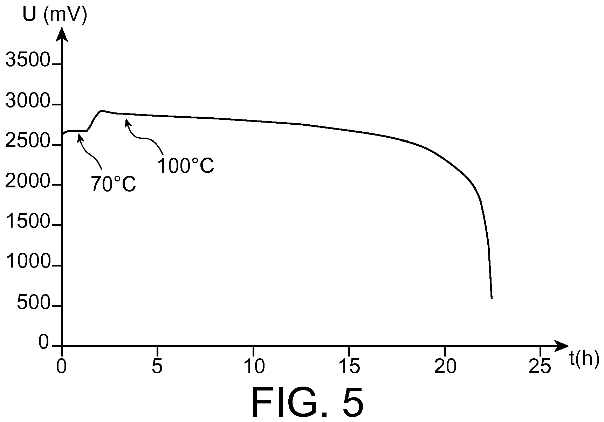

La courbe de décharge, c'est-à-dire la courbe illustrant l'évolution de la tension de pile U (en mV) en fonction du temps t (en heure) à courant constant (10 mA) à 70°C puis à 100°C, est représentée sur la figure 5.

Il ressort de cette figure que la pile se décharge sous 10 mA à 70 °C avec une tension supérieure à 2,5 V. La surtension diminue sensiblement si la température augmente à 100 °C. Comme la surface développée de l'électrode est très faible, la décharge est courte dans ces conditions de températures.

EXEMPLE 6

Cet exemple est similaire à l'exemple 1, si ce n'est que l'expérience de décharge est réalisée sous un régime de décharge pulsée sous 2 mA (59 s) et 100 mA (1 s) à 220°C.

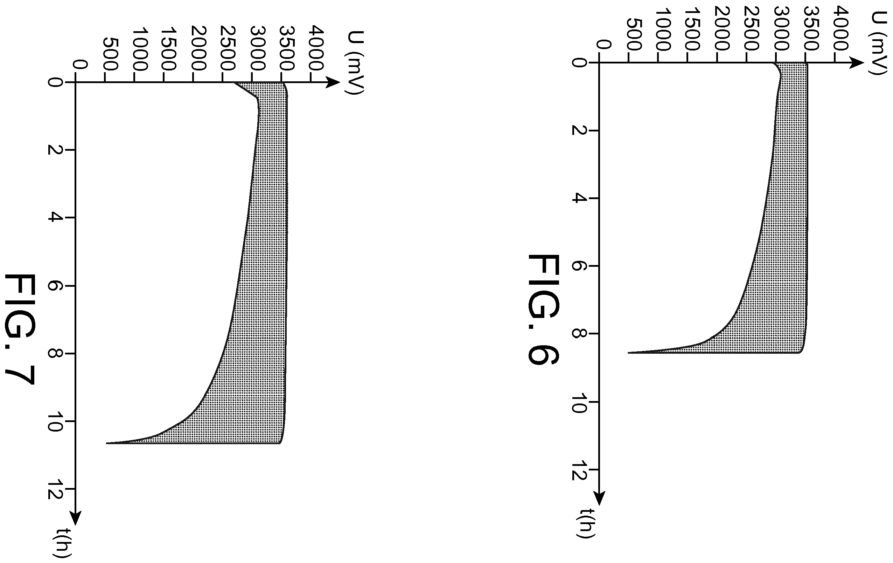

Les courbes de décharge, c'est-à-dire les courbes illustrant l'évolution de la tension de pile U (en mV) en fonction du temps t (en heure) sont représentées respectivement sur la figure 6 pour la pile non conforme à l'invention et sur la figure 7 pour la pile conforme à l'invention.

Il ressort, de ces figures, que la décharge est plus longue pour la pile conforme à l'invention. La tension n'est pas impactée par l'utilisation des fibres de carbone même dans le cas du pulse à 100 mA.

## Revendications

1. Pile à cathode liquide comprenant :

   - une anode en calcium ;
   - un électrolyte comprenant un solvant oxydant soufré et/ou phosphoré et au moins un sel ;
   - une cathode comprenant, comme matériau actif, un composé identique au solvant oxydant susmentionné et comprenant une matrice carbonée ;

   **caractérisée en ce que** la matrice carbonée est une matrice autosupportée comprenant des fibres de carbone enchevêtrées présentant une porosité d'au moins 90% et une surface spécifique inférieure ou égale à 5 $m^2/g$.

2. Pile selon la revendication 1, dans laquelle la matrice carbonée est composée majoritairement voire exclusivement de fibres de carbone enchevêtrées.

3. Pile selon la revendication 1 ou 2, dans laquelle les fibres de carbone présentent une longueur inférieure à 20 mm et un diamètre inférieur à 15 $\mu$m.

4. Pile selon l'une quelconque des revendications précédentes, dans laquelle la matrice carbonée répond à l'une ou plusieurs des caractéristiques suivantes :

   - un grammage inférieur ou égal à 20 $g/m^2$ ;
   - lorsque la matrice se présente sous forme d'une plaque, une épaisseur inférieure à 1 mm, de préférence inférieure à 0,5 mm ;
   - la matrice carbonée est dénuée de liant polymérique.

5. Pile selon l'une quelconque des revendications précédentes, dans laquelle le solvant oxydant est un solvant soufré, comprenant un ou plusieurs atomes de chlore, un solvant soufré non chloré ou un solvant phosphoré et éventuellement soufré comprenant un ou plusieurs atomes de chlore.

6. Pile selon la revendication 5, dans laquelle le solvant soufré comprenant un ou plusieurs atomes de chlore est choisi parmi le chlorure de thionyle ($SOCl_2$), le chlorure de sulfuryle ($SO_2Cl_2$), le dichlorure de disoufre ($S_2Cl_2$), le dichlorure de soufre ($SCl_2$).

7. Pile selon la revendication 5, dans laquelle le solvant phosphoré et éventuellement soufré comprenant un ou plusieurs atomes de chlore est choisi parmi le trichlorure de phosphoryle ($POCl_3$), le trichlorure de thiophosphoryle ($PSCl_3$).

8. Pile selon l'une quelconque des revendications 1 à 6, dans laquelle le solvant oxydant est du chlorure de thionyle ($SOCl_2$).

9. Pile selon l'une quelconque des revendications précédentes, dans laquelle le sel résulte de la réaction d'un acide de Lewis et d'une base de Lewis.

10. Pile selon l'une quelconque des revendications précédentes, dans laquelle l'électrolyte comprend un ou plusieurs additifs choisis parmi l'acide fluorhydrique HF, $SO_2$, des sels tels que $GaCl_3$, $BiCl_3$, $BCl_3$, $GaCl_3$, $InCl_3$, $VCl_3$, $SiCl_4$,

$NbCl_5$, $TaCl_5$, $PCl_5$ et $WCl_6$.

**Patentansprüche**

1. Batterie mit flüssiger Kathode, umfassend:

   - eine Anode aus Calcium;
   - einen Elektrolyt, der ein schwefel- und/oder phosphorhaltiges oxidierendes Lösungsmittel und mindestens ein Salz umfasst;
   - eine Kathode, die als Aktivmaterial eine Verbindung, die mit dem oben erwähnten oxidierenden Lösungsmittel identisch ist, und eine kohlenstoffhaltige Matrix umfasst;

   **dadurch gekennzeichnet, dass** es sich bei der kohlenstoffhaltigen Matrix um eine selbsttragende Matrix handelt, die verwirrte Kohlefasern mit einer Porosität von mindestens 90 % und einer spezifischen Oberfläche weiner oder gleich 5 $m^2$/g umfasst.

2. Batterie nach Anspruch 1, wobei die kohlenstoffhaltige Matrix hauptsächlich oder sogar ausschließlich aus verwirrten Kohlefasern besteht.

3. Batterie nach Anspruch 1 oder 2, wobei die Kohlefasern eine Länge von weniger als 20 mm und einen Durchmesser von weniger als 15 $\mu$m aufweisen.

4. Batterie nach einem der vorhergehenden Ansprüche, wobei die kohlenstoffhaltige Matrix einem oder mehreren der folgenden Merkmale entspricht:

   - ein Flächengewicht kleiner oder gleich 20 g/$m^2$ ;
   - wenn die Matrix in Form einer Platte vorliegt, eine Dicke von weniger als 1 mm, vorzugsweise weniger als 0,5 mm;
   - die kohlenstoffhaltige Matrix ist frei von polymerem Bindemittel.

5. Batterie nach einem der vorhergehenden Ansprüche, wobei es sich bei dem oxidierenden Lösungsmittel um ein schwefelhaltiges Lösungsmittel mit einem oder mehreren Chloratomen, ein chlorfreies schwefelhaltiges Lösungsmittel oder ein phosphorhaltiges und gegebenenfalls schwefelhaltiges Lösungsmittel mit einem oder mehreren Chloratomen handelt.

6. Batterie nach Anspruch 5, wobei das schwefelhaltige Lösungsmittel mit einem oder mehreren Chloratomen aus Thionylchlorid ($SOCl_2$), Sulfurylchlorid ($SO_2Cl_2$), Dischwefeldichlorid ($S_2Cl_2$) und Schwefeldichlorid ($SCl_2$) ausgewählt ist.

7. Batterie nach Anspruch 5, wobei das phosphorhaltige und gegebenenfalls schwefelhaltige Lösungsmittel mit einem oder mehreren Chloratomen aus Phosphoryltrichlorid ($POCl_3$) und Thiophosphoryltrichlorid ($PSCl_3$) ausgewählt ist.

8. Batterie nach einem der Ansprüche 1 bis 6, wobei es sich bei dem oxidierenden Lösungsmittel um Thionylchlorid ($SOCl_2$) handelt.

9. Batterie nach einem der vorhergehenden Ansprüche, wobei sich das Salz aus der Reaktion einer LewisSäure und einer Lewis-Base ergibt.

10. Batterie nach einem der vorhergehenden Ansprüche, wobei der Elektrolyt ein oder mehrere Additive umfasst, die aus Fluorwasserstoffsäure HF, $SO_2$ und Salzen wie $GaCl_3$, $BiCl_3$, $BCl_3$, $GaCl_3$, $InCl_3$, $VCl_3$, $SiCl_4$, $NbCl_5$, $TaCl_5$, $PCl_5$ und $WCl_6$ ausgewählt sind.

**Claims**

1. Liquid cathode battery comprising:

- an anode made of calcium;
- an electrolyte comprising a sulphur-containing and/or phosphorous-containing oxidising solvent and at least one salt;
- a cathode comprising, as the active material, a compound which is identical to the above-mentioned oxidising solvent, and which comprises a carbon-containing matrix;

**characterised in that** the carbon-containing matrix is a self-supporting matrix which comprises interlaced carbon fibres which have a porosity of at least 90% and a specific surface area equal to or less than 5 $m^2$/g.

2. Battery according to claim 1 wherein the carbon-containing matrix is primarily or even exclusively composed of interlaced carbon fibres.

3. Battery according to claim 1 or 2 wherein the carbon fibres have a length of less than 20 mm and a diameter of less than 15 $\mu$m.

4. Battery according to any whatsoever of the preceding claims, wherein the carbon-containing matrix meets the requirements of one or more of the following characteristics:

   - a mass per unit surface area less than or equal to 20 g/m2;
   - when the matrix takes the form of a plate, its thickness is less than 1mm, preferably less than 0.5 mm;
   - the carbon-containing matrix is free of polymer binder.

5. Battery according to any whatsoever of the preceding claims, wherein the oxidising solvent is a sulphur-containing solvent, comprising one or more chlorine atoms, a non-chlorine-containing sulphur-containing solvent or a phosphorous-containing and possibly sulphur-containing solvent comprising one or more chlorine atoms.

6. Battery according to claim 5, wherein the sulphur-containing solvent, comprising one or more chlorine atoms, is chosen from thionyl chloride ($SOCl_2$), sulphuryl chloride ($SO_2Cl_2$), disulphur dichloride ($S_2Cl_2$), sulphur dichloride ($SCl_2$).

7. Battery according to claim 5 wherein the phosphorous-containing and possibly sulphur-containing solvent comprising one or more chlorine atoms is chosen from phosphoryl trichloride ($POCl_3$), thiophosphoryl trichloride ($PSCl_3$).

8. Battery according to any whatsoever of claims 1 to 6 wherein the oxidising solvent is thionyl chloride ($SOCl_2$).

9. Battery according to any whatsoever of the preceding claims, wherein the salt is the result of the reaction of a Lewis acid with a Lewis base.

10. Battery according to any whatsoever of the preceding claims, wherein the electrolyte comprises one or more additives chosen from hydrofluoric acid HF, $SO_2$, salts such as $GaCl_3$, $BiCl_3$, $BCl_3$, $GaCl_3$, $InCl_3$, $VCl_3$, $SiCl_4$, $NbCl_5$, $TaCl_5$, $PCl_5$ and $WCl_6$.

FIG. 1

FIG. 2

FIG. 3

FIG. 4

FIG. 5

FIG. 6

FIG. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2166015
- FR 2402307
- FR 2872347
- FR 3032559 A1
- GB 2187590 A
- US 5705293 A

**Littérature non-brevet citée dans la description**

- *Journal of the American Chemical Society,* 1938, vol. 60, 309